## Europäisches Patentamt
## European Patent Office
## Office européen des brevets

(11) Veröffentlichungsnummer: **0 184 817**
**A2**

# (12) EUROPÄISCHE PATENTANMELDUNG

(21) Anmeldenummer: 85115682.8

(51) Int. Cl.4: **B01D 3/12**

(22) Anmeldetag: **10.12.85**

(30) Priorität: **10.12.84 ES 538461**

(43) Veröffentlichungstag der Anmeldung:
**18.06.86 Patentblatt 86/25**

(84) Benannte Vertragsstaaten:
**BE CH DE FR GB IT LI**

(71) Anmelder: **SPADIMWIS, S.A.**
**Paseo de Gracia, 92**
**E-08017 Barcelona(ES)**

(72) Erfinder: **Barreteau, Pierre**
**Via Riasc No. 6/A**
**Campione d'Italia(FR)**

(74) Vertreter: **Leiser, Gottfried, Dipl.-Ing.**
**Patentanwälte Prinz, Leiser, Bunke & Partner Ernsberger Strasse 19**
**D-8000 München 60(DE)**

(54) **Destillierverfahren.**

(57) Das Problem der beschränkten Anwendbarkeit von herkömmlichen Kurzweg-Molekulardestillationsverfahren aufgrund der Druckabsenkung unter Hochvakuum kann durch eine Vergrößerung der Verdampferflächen gelöst werden, wodurch jedoch Herstellungskosten und Volumen gesteigert werden. Nach dem erfindungsgemäßen Verfahren wird als Verdampferoberfläche eine dreidimensionale Trägerstruktur verwendet, so daß bei abgewickelter Fläche eines Volumens im Vergleich zu einer ebenen, zweidimensionalen Fläche gleichen Umfangs ein mindestens dreimal größerer Wert erzielt wird. Grundkörper des Verdampfers ist ein starres Gewebe aus teflonbeschichteter Glasfaser, worin durch Hohlräume, Taschen und Zwischenräume dreidimensionale Oberflächen gebildet sind, auf denen sich die Flüssigkeit ausbreitet. Das Verfahren ist von sehr allgemeiner Anwendbarkeit. Besonderes Anwendungsgebiet ist die teilweise Raffination aller Arten von Ölen und Fetten, die Destillation von chemischen Produkten wie Glyzerine, Alkohole und dergleichen, von pharmazeutischen Produkten wie Aminosäureester, Vitamine und dergleichen sowie das Gebiet der Aromastoffe und Kosmetika.

EP 0 184 817 A2

Destillierverfahren

Wie schon der Titel dieser Patentbeschreibung zum Ausdruck bringt, bezieht sich die vorliegende Erfindung auf ein praktisch universell anwendbares Destillierverfahren.

Insbesondere ist dieses Verfahren anwendbar auf die teilweise Raffination aller Arten von Ölen und Fetten sowohl pflanzlicher als auch tierischer Herkunft, Fettsäuren und deren Derivaten, Mono- und Diglyceriden u.s.w.; desweiteren ist es anwendbar für Mineralöle, und zwar sowohl Altals auch Schweröle, sowie für die Destillation chemischer Produkte, so z.B. Glyzerine, Alkohole, Polyglykole, Glykolester, Silikonöle u.s.w., für pharmazeutische Produkte wie Aminosäureester, Terpenester, Vitamine u.s.w., und schliesslich ist dieses Verfahren auch anwendbar auf dem Gebiet der Aromastoffe und Kosmetika, insbesondere für die Destillation von ätherischen Ölen.

Das erfindungsgemässe Destillierverfahren beruht auf dem bereits bekannten Prinzip der "Kurzweg"-bzw. Molekulardestillation.

Dieses Prinzip besteht darin, dass auf die Verbindungsleitung zwischen Verdampfer und Kondensator verzichtet wird.

Hierzu werden die beiden Elemente in ungefährem Abstand koaxial zueinander angeordnet.

Auf diese Weise wird der Begriff des "kurzen Weges" zwischen Verdampfer und Kondensator deutlich; dieser Umstand ermöglich nun die sogenannte "Molekulardestillation", bei der die mittlere freie Weglänge der Moleküle gleich oder grösser sein muss als der Abstand zwischen Verdampfungsfläche und Kondensationsfläche.

Innerhalb der Anordnung eines "Kurzweg"-Destillators (Short Path) befindet sich der Kondensator in einer auf wenige Zentimeter reduzierten Entfernung vom Verdampfer, wobei zu berücksichtigen ist, dass diese Entfernung in Abhängigkeit von der mittleren freien Weglänge der Moleküle berechnet werden muss und im Grenzfall ein Vielfaches derselben betragen kann.

Im Gegensatz zu den herkömmlichen Destillatoren (d.h. keine Kurzwegdestillatoren), wo der relativ grosse Abstand zwischen Verdampfer und Kondensator nach der Poiseuille'schen Strömung zwischen den beiden eine Erhöhung des Drucks im sogenannten "Frontdestillator" zur Folge hat, ist dies also beim "Kurzweg"-Destillator nicht der Fall.

Ausgehend von dieser Beobachtung erweist es sich bei den herkömmlichen Destillatoren als nahezu unmöglich, den Restdruck unterhalb eines gewissen Grenzwertes in Bezug auf den Siedepunkt des zu destillierenden Produkts abzusenken; d.h. in den meisten Fällen also: 1 - 2 mm/Hg.

Unter Hochvakuum wird nach dem Mariotte'schen Gesetz (PV - konstant) festgestellt, dass das Volumen der Dämpfe derartig gross ist, dass die Geschwindigkeit dieser Dämpfe - auf dem Weg zwischen Verdampfer und Kondensator - Werte erreicht, die eine Drucksenkung innerhalb gewisser Grenzen praktisch unmöglich machen.

Diese Vorgänge führen zwangsläufig, da eine drucksenkung nicht möglich ist, zu relativ hohen Temperaturen, was wiederum eine Überhitzung des zu destillierenden Stoffes mit den sich daraus ergebenden Nachteilen zur Folge hat, wenn dieser Stoff, vor allem auch besonders hitzeempfindliche Substanzen, vor jeglicher Veränderung bewahrt werden sollen.

Somit also ist bei der "Kurzweg"-Destillation die Möglichkeit gegeben, den Restdruck und folglich auch die Destillationstemperatur zu senken. Der wichtigste Vorteil dieses Verfahrens besteht also darin, dass auch hochmolekulare organische Stoffe innerhalb gewisser, akzeptabler Temperaturgrenzwerte destilliert werden können, d.h. ohne dass die Gefahr einer Zersetzung bzw. wesentlichen Veränderung bestünde.

Es besteht also die Möglichkeit, den Gesamtdruck auf $10^{-3}$mm/Hg zu reduzieren, was im Vergleich zu herkömmlichen Destillatoren bedeutet, dass die Temperatur um 100 °C oder mehr gesenkt werden kann.

Diese Temperatur- und Druckbedingungen sind noch dadurch zu ergänzen, dass die zu destillierende Substanz in dünner Schicht auf der Fläche des Verdampfers verteilt werden kann, sodass eine Überhitzung vermieden und die Destillationstemperatur innerhalb kürzester Zeit erreicht wird.

Die zur Zeit im Handel befindlichen Kurzweg-Destillierapparate sind in gewisser Hinsicht nur beschränkt geeignet für die Destillation von Produkten mit relativ geringem Marktwert, so z.B. pflanzliche Öle, mineralische Altöle u.s.w.

Diese Beschränkung ist darauf zurückzuführen, dass die Drucksenkung unter Hochvakuum zwangsläufig eine Verlangsamung des Verdampfungsvorgangs zur Folge hat, was durch den Einsatz grösserer Verdampfungsflächen kompensiert werden muss.

Bei den bisher bekannten Geräten werden für die Verdampfung polierte Platten aus rostfreiem Stahl benutzt, was den Einsatz umfangreicher und daher zwangsläufig kostspieliger Ausrüstungen erforderlich macht, sodass die erforderlichen Abschreibungen und folglich auch die Betriebskosten eine normale Rentabilität unmöglich machen.

Für eine gegebenen Druck und eine gegebene Temperatur folgt die Verdampfungsgeschwindigkeit der von Langmuir-Knudsen erstellten und auf dem Maxwell-Bolzmann'schen Gesetz beruhenden Regel, wonach:

$$G \cdot 0{,}06 \times p \times \frac{M}{T}$$

G = g/cm2/s

P = Druck in mm/Hg

M = Molekulargewicht der verdampfenden Flüssigkeit

T = absolute Temperatur

0,06 = Koeffizient, der die verschiedenen Masseinheiten (in Bezug auf die universelle Gaskonstante) berücksichtigt.

Aus dieser Verhältnisgleichung wird deutlich, wie wichtig der Druck ist.

Geht beispielsweise der Druck von $10^{-2}$mm/Hg auf $10^{-3}$mm/Hg über, so ist damit eine Verlangsamung des Verdampfungsvorgangs um 90 % verbunden. Im ersten Fall wird z.B. ein Ertrag von 10 kg pro m2/h erzielt, während es bei $10^{-3}$mm/Hg nur noch 1 kg ist. Um also bei $10^{-3}$mm/Hg einen Ertrag von 10 kg zu erzielen, muss die Verdampfungsfläche auf 10 m2 vergrössert werden.

Soll daher das Kurzweg-Destillierverfahren unter wirtschaftlich annehmbaren Bedingungen insbesondere auch bei der Verarbeitung von Produkten mit geringem Handelswert zum Einsatz kommen, so müssen vor allem grosse Verdampfungsflächen zu Verfügung stehen, gleichzeitig aber auch die Grösse der Apparate eingeschränkt und damit die Kosten gesenkt werden.

Das erfindungsgemässe Destillierverfahren wurde speziell dazu erdacht, eine voll befriedigende lösung dieser Probleme zu finden, und in diesem Sinne liegt der Schwerpunkt der Erfindung insbesondere auf der Verwirklichung von Verdampfern mit grosser Gesamtfläche bei gleichzeitig reduziertem Umfang, sowie auf einem Erwärmungssystem durch direkte Bestrahlung der Verdampfer insbesondere durch den Einsatz von Mikrowellen.

Genauer gesagt bestehen die Verdampfer im Prinzip aus einem starren Spezialgewebe aus teflonbeschichteter Glasfaser. Dieses Gewebe hält Temperaturen bis zu 260°C stand. Je nach Art schwankt die Stärke zwischen 0,225 mm und 0,685 mm, wobei die dem Gewebe eigene Struktur ihm einen dreidimensionalen Charakter verleiht, sodass im Vergleich zu einer polierten Stahlplatte (wie sie bei den bisher bekannten Kurzweg-Destillatoren benutzt wird) bei gleichem Umfang eine grössere Nutzfläche, d.h. Trägerfläche der verdampfenden Flüssigkeit erzielt wird.

Je nach Beschaffenheit der zu destillierenden Produkte können an Stelle des oben beschriebenen Gewebes auch andere Materialien benutzt werden. So wurden Werkstoffe vorgesehen wie z.B. Leichtkeramik, Spezialkeramik, Kohlenstoffaser u.s.w. ..... und allgemein alle Werkstoffe, die eine dreidimensionale Struktur aufweisen, die in der Lage ist, die eigentliche Trägerfläche der zu destillierenden Substanz zu vergrössern. Andererseits müssen diese Werkstoffe für die vorgesehenen Betriebstemperaturen geeignet sein.

Ihr Aufbau muss letztlich den physikalisch-chemischen Parametern der zu destillierenden Produkte gerecht werden, insbesondere hinsichtlich der Korrosionsfestigkeit; sie müssen für die jeweilige Viskosität dieser Produkte geeignet sein, sodass eine gleichmässige Verteilung über die gesamte zu Verfügung stehende Fläche möglich ist; hinsichtlich ihrer Porosität müssen Erscheinungen berücksichtigt werden wie die Rückbehaltung der verdampfenden Flüssigkeit und auch all jene Phänomene, wie sie von den Gesetzmässigkeiten der Phasenübergänge (Übergang von der flüssigen Phase in die Dampfphase) diktiert werden.

Vom harmonischen Zusammenspiel dieser Parameter hängt die optimale Leistungsfähigkeit der Verdampfungsfläche ab.

Allgemein erklärt sich die Vergrösserung der Fläche dadurch, dass beispielsweise beim Gewebe die Fäden und Maschen insgesamt räumlich angeordnete Flächen aufweisen, während bei den übrigen Werkstoffen Vertiefungen und Zwischenräume vorhanden sind, in die die Flüssigkeit eindringen kann.

In der Praxis kann davon ausgegangen werden, dass die Summe all dieser räumlich angeordneten Flächen etwa dreimal so gross ist wie die dem Umfang entsprechende Fläche.

Die Neuheit des hier vorgeschlagenen Systems gründet sich daher im wesentlichen auf die Gestaltung eines Verdampfungsträgers mit insgesamt grosser Nutzfläche auf kleinem Raum.

Bei den für die Konstruktion derartiger Verdampfungsträger erforderlichen Grundberechnungen können die nach den Methoden der klassischen Physik vorgesehenen Berechnungen als Bezugspunkt dienen. In der Praxis jedoch kann aufgrund der vielfältigen Parameter, die hier im Spiel sind, eine endgültige Lösung nur auf experimentellem Wege gefunden werden.

Die Verdampfer sind drehbar und kegelstumpfförmig ausgebildet, wobei sich ihr kleinster Durchmesser oben befindet. Durch die Wirkung der Fliehkraft wird bei dieser Anordnung erreicht, dass sich der im oberen Bereich des Verdampfers anströmende flüssige Film beständig in waagrechter und senkrechter Richtung von oben nach unten verschiebt und dabei eine schraubenförmige Bewehgung ausführt. Dies hat eine kontinuierliche Erneuerung des flüssigen Films auf allen Flächen des Trägers zur Folge.

Die Neigung des Verdampfungsträgers (Mantel des Kegelstumpfs) beträgt etwa 6°.

Das zu destillierende Rohprodukt wird kontinuierlich im oberen Innenbereich des sich drehenden Verdampfers tangential aufgegeben und durch die oben beschriebene Verschiebung gleichmässig darauf verteilt.

Die jeweilige Drehgeschwindigkeit, die bis zu 500 Umdrehungen pro Minute erreichen kann, wird so berechnet, dass die auf den Mantel des Verdampfers einwirkende Fliehkraft einerseits mit den Adhäsionskräften und andererseits mit der Geschwindigkeit der von oben nach unten erfolgenden Strömung innerhalb der für die Destillation vorgesehenen Zeit (Durchlaufzeit) im Verhältnis steht.

Ausserdem wird der Neigungswinkel für den Kegelstumpfmantel in Abhängigkeit von den mit zunehmendem Durchmesser grösser werdenden Fliehkräften berechnet, sodass die ebenfalls wachsenden Adhäsionskräfte der Flüssigkeit, die sich nach der mit fortschreitender Destillation immer grösser werdenden Viskosität bestimmen, kompensiert werden können.

Die Höhe des Verdampfers berechnet sich ausgehend von einer dynamischen Viskosität von 0,01 Dyn/s/cm2 (1cP) bei Destillationstemperatur und für eine Durchlaufzeit von ca. 1 Sekunde.

Erwähnenswert ist, dass die Verdampfer und insbesondere die Trägertypen beweglich und austauschbar gestaltet sind. Dadurch ist die Möglichkeit gegeben, an ein und demselben Apparat sowohl den Trägertyp als auch dessen Neigungswinkel zu verändern.

Auf diese Weise wird eine Vielfalt unterschiedlicher Anwendungsmöglichkeiten erreicht.

Bei Verdampfern der oben beschriebenen Art handelt es sich um ein frei im Raum stehendes Trägersystem für die zu destillierende Flüssigkeit; die für die Destillation erforderliche Zufuhr von Wärmeenergie kann daher nur über ein Bestrahlungssystem erfolgen.

Die Wahl fiel dabei auf ein Bestrahlungssystem starker Mikrowellen mit einer Frequenz von 2450 MHz.

Tatsächlich muss bedacht werden, dass es sich bei den meisten Produkten, die für eine Kurzweg-Destillation in Frage kommen, um dielektrische Stoffe handelt.

Bei diesen ist infolge der hohen Beanspruchungsfrequenz der Moleküle, die dem gekreuzten Mikrowellenfeld ausgesetzt sind, der Verlustwinkel $\delta$ sehr gross, sodass erhebliche Dissipation und damit eine Erwärmung normalerweise nicht dissipativer Stoffe erreicht wird.

Bei einer Erwärmung mit Mikrowellen entsteht Wärme direkt in der bestrahlten Substanz und nicht, wie es bei den herkömmlichen Systemen der Fall ist, ausschliesslich durch Wärmeleitung und Konvektion. Auf diese Weise wird verständlich, dass die Bestrahlung bei hoher Frequenz (2450 MHz) eine starke Beanspruchung der Moleküle innerhalb der dünnen Schicht des Flüssigkeitsfilms hervorruft, der die einzelnen Oberflächen des Verdampfers überzieht.

Ein wesentlicher Aspekt des SPADIMWIS-Verfahrens besteht darin, dass die Verdampfungsträger (teflonbeschichtetes Glasfasergewebe oder sonstige Materialien) für Mikrowellen durchlässig sind und die Bestrahlung des verdampfenden Films daher nicht beeinträchtigen. Die ausgestrahlten Mikrowellen treffen so kontinuierlich und gleichmässig auf die gesamte Stärke des auf der Träger haftenden Films.

Aus den bisherigen Ausführungen in Zusammenhang mit dem erfindungsgemässen Destillierverfahren lassen sich folgende Schlüsse ziehen:

Verdampfer mit grosser Gesamtfläche bei geringem Umfang

Durch die räumliche Struktur des für die Verdampfer benutzten Trägers kann aufgrund der Porosität der hierfür verwendeten Werkstoffe und infolge der Kapillarwirkung und relativer Haftbarkeit der darauf befindlichen Flüssigkeit die Konzentration des zu destillierenden Produkts pro Flächeneinheit wesentlich erhöht werden.

Die Flüssigkeit verteilt sich über alle verfügbaren Flächen. Es kann sich dabei zwar um mindestens die gleiche Menge Flüssigkeit handeln, wie sie sich auf einer polierten Fläche (z.B. auf der bei herkömmlichen Destilliergeräten benutzten Platte aus rostfreiem Stahl) verteilen lässt, hier aber ist diese Menge auf einer dreimal so grossen Quadratfläche verteilt.

In der Praxis also besteht die Möglichkeit, Geräte zu bauen, die dreimal weniger Platz beanspruchen als herkömmliche Apparate.

Stärke und Profil des flüssigen Films in statischem Zustand

Aufgrund der dreidimensionalen Struktur des Trägers kann die durchschnittliche Stärke des Films letztlich mit der auf einer polierten Fläche gegebenen Stärke verglichen werden, der Film weist jedoch ein diskontinuierliches Profil auf, was sich auf die Verdampfungsvorgänge sehr vorteilhaft auswirkt.

Durch die Porosität entstehen im Träger leere Räume, die dazu neigen, in ihrer Umgebung eine Dehnung (Stretching) des flüssigen Films hervorzurufen, wobei dieser im Vergleich zum restlichen System in einen Zustand maximaler Spannung bei relativer Verringerung der Oberflächenspannung versetzt wird.

Angenommen, der Film befindet sich in statischem Zustand (d.h. es wirkt keine Fliehkraft auf ihn ein), so erreicht er seine maximale Stärke dort, wo sich die Fäden, z.B. bei Verwendung des teflonbeschichteten Glasfasergewebes, überschneiden, während er in der Mitte der Masche die geringste Stärke aufweist. Das gleiche ist auch bei Verwendung anderer Materialien der Fall, wo die leeren Zwischenräume für die Dehnung des flüssigen Films günstige Voraussetzungen schaffen.

In diesem angenommenen statischen Zustand weist der Film also ein geometrisch wechselndes Profil unterschiedlicher Stärken auf je nachdem, ob er sich auf den Schnittpunkten der Fadenkreuze oder aber in der Mitte eines leeren Zwischenraums befindet. So also folgt das Profil einer abwechselnd kurvenförmigen Linie mit relativen Verdünnungen, die sich in regelmässigen Abständen in der Mitte der leeren Zwischenräume wiederholen.

Verhalten des Films unter Einwirkung der Fliehkraft

Sobald die Wand des Verdampfers unter der Einwirkung der Fliehkraft steht, erfährt der darauf befindliche Film eine Reihe kontinuierlicher Zustandsänderungen dynamischer Art.

Vor allem verringert sich die Oberflächenspannung der Flüssigkeit, während die Grenzflächenspannung (zwischen Flüssigkeit und Festkörper) zunimmt, da der Berührungswinkel infolge des Energiegleichgewichts im System Festkörper/Flüssigkeit/Gas kleiner wird. Ergebnis ist eine Zunahme der in Richtung Träger wirkenden Adhäsionskräfte.

Die Grenzflächenspannung pro umfangmässiger Flächeneinheit nimmt zu, berücksichtigt man die Summe der vorhandenen, im Raum angeordneten Flächen.

Die netzartige Struktur dieser Flächen trägt dazu bei, die Kapillarkräfte zu steigern, und führt zu einer gleichmässigen Verteilung des flüssigen Films über den gesamten Träger.

Die Fliehkraft baut zudem ein Kraftfeld auf, das zu einem relativen Gleichgewicht des auf dem Träger befindlichen flüssigen Films führt. Tatsächlich sind eine Reihe von Verschiebungen des flüssigen Films zu beobachten, die sich aus der Kombination der resultierenden Normalkräfte und der angreifenden Tangentialkräfte ergeben. Es entsteht ein Gleichgewicht der Kräfte infolge der Viskosität der Flüssigkeit. In anderen Worten neigt der direkt mit der Wand in Berührung stehende flüssige Film dazu, die gleiche Geschwindigkeit, d.h. die des Trägers, anzunehmen. Dies ist der Grund, weshalb das Geschwindigkeitsgefälle und die tangentialen Beanspruchungen in der Flüssigkeit gerade in einem beschränkten Bereich nahe am Träger besonders gross sind. Ausserhalb dieses Bereichs oder dieser "Grenzschicht" nimmt das Geschwindigkeitsgefälle stark ab, und die Viskositätsbeanspruchungen sind geringer.

Im ersten Fall herrscht "Turbulenz" innerhalb der Grenzschicht, d.h. die einander benachbarten Schichten der Flüssigkeit mischen sich aufgrund der beständigen Reibung, die zwischen ihnen besteht. Die Vermischung dieser Schichten ist auf parallele Molekularbewegungen zurückzuführen, die unter unregelmässigen Schwankungen in den der durchschnittlichen Geschwindigkeit des gesamten Flüssigkeitsfilms überlagerten Geschwindigkeiten stattfinden.

Aufgrund der unregelmässigen Struktur im Profil des Trägers haben wir es hier mit einer Diskontinuitätsfläche zu tun, die besondere Turbulenzerscheinungen hervorruft.

Die angreifende Fliehkraft neigt dazu, dem Profil des flüssigen Films eine leicht wellenförmige, parallel zum Träger verlaufende Gestalt zu verleihen. Es entstehen so aufeinander folgende Wellen, die sich der Form des Trägers folgend verschieben.

Als Folge hiervon entstehen gewisse zentrifugale Drücke, die den Druck an den Schnittpunkten verstärken, den Druck in den leeren Zwischenräumen jedoch verringern.

Der kegelstumpfförmigen Gestalt des Trägers folgend wird durch die mit zunehmendem Durchmesser des Trägers wachsenden Zentrifugalkräfte eine kontinuierliche, schräg verlaufende Verschiebung des flüssigen Films bewirkt, wobei jedoch keine Diskontinuität im Profilquerschnitt des Films und der einzelnen Schichten, aus denen er sich zusammensetzt, festzustellen ist. Die Parallelverschiebungen der übereinander gelagerten Schichten des Films erzeugen eine stetige wellenförmige Wirbelbewegung, welche die Beweglichkeit der Moleküle im Film selbst begünstigt.

Das heisst also, es kommt zu einem quantitativen Bewegungsaustausch zwischen den Partikeln der einzelnen Schichten. Dies entspricht der Anwendung von Kräften einer Schicht auf eine andere; diese Kräfte entstehen durch die quantitativen Änderungen der Bewegung, denen die Partikel der einzelnen Schichten ausgesetzt sind, wenn Partikel einer anderen Geschwindigkeit in sie eindringen. Materiell ausgeübt werden derartige Kräfte durch den Zusammenstoss der Moleküle.

Unter diesen Umständen trägt die Anwendung der Fliehkraft dazu bei:

- den flüssigen Film gleich zu Beginn optimal über alle verfügbaren Flächen zu verteilen;

- eine kontinuierliche, schraubenförmige Verschiebung des Films und dessen beständige Erneuerung auf allen Flächen des Trägers zu gewährleisten, wobei zu berücksichtigen ist, dass dieser eine Kegelsteigung von 6° aufweist;

- das Phänomen der Dehnung (Stretching) des Films im Bereich der leeren Zwischenräume des Trägers zu verstärken. Auf diese Weise kommt es zu einer vermehrten Erneuerung des Films in diesen Bereichen, da sich der in der Höhlung entstehende bikonkave Meniskus ständig verschiebt.

Im Zentrum des Meniskus ist ein Zustand maximaler Spannung des Films festzustellen, d.h. eine rund ausstrahlende Dehnung des Films, die vom Mittelpunkt ausgehend zu dem durch den Umfang der Höhlung begrenzten Rand hin verläuft. Im Zentrum dieses Bereichs ist die auftretende Oberflächenspannung am geringsten, der flüssige Film erreicht hier die kleinste mögliche Stärke, die mit den gegebenen Kapillarkräften noch vereinbar ist. Diese kleinstmögliche Stärke ist einer der wichtigsten Faktoren im Hinblick auf die maximale Verdampfungsgeschwindigkeit, zumal wenn man dabei noch die beständige Erneuerung des Films in diesem Bereich berücksichtigt;

- eine erhebliche Turbulenz der Moleküle im Innern des Films hervorzurufen, was zu einer stetigen Erneuerung der sich beständig verschiebenden, parallel zueinander verlaufenden Schichten führt.

## Verdampfung

Der Zustand des flüssigen Films im Innern der leeren Zwischenräume des Trägers bietet ideale Bedingungen für die Verdampfung, da seine Stärke hier automatisch einen Mindestwert annimmt im Verhältnis zu der Filmstärke auf den Faserschnittpunkten des Trägers. Es bestehen zwar nicht mehr Absorptionskräfte als auf den Faserschnittpunkten, es wirken jedoch Kapillarkräfte in Richtung auf eine seitliche Dehnung, die dazu neigen, dem Film eine grössere räumliche Spannung und damit eine Tendenz zu verleihen, die ihn einen Grenzzustand minimaler Molkohäsion bei grösserem Energiegehalt anstreben lässt.

Dieser Umstand ermöglicht eine maximale Wärmeaufnahme pro Mengeneinheit des Produkts und eine maximale Verdampfungsgeschwindigkeit. Es entsteht so eine spontane Wanderung der Moleküle, wobei sich jene Bestandteile, die ein geringeres Molargewicht aufweisen und sich schneller verflüchtigen, zum Zentrum des Meniskus hin bewegen.

Hieraus ist klar zu erkennen, wie die Verdampfung und damit die Abscheidung schnell flüchtiger Bestandteile gefördert werden kann.

Die von diesen freien Zwischenräumen dargestellten Flächen könnten in diesem Zusammenhang als die eigentlichen und wirksamsten Verdampfungsflächen angesehen werden oder doch zumindest als die Endphase eines Verdampfungsprozesses, der auf den ebenen Teilen des Trägers seinen Anfang nimmt, wo der Film ein Wärmegefälle annimmt, das sofort im Bereich des leeren Zwischenraums verstärkt wird, sobald die Flüssigkeit in diesen Raum eindringt. Zu der in der ersten Phase aufgenommenen Wärmeenergie kommt noch diejenige Wärme hinzu, die durch die direkte Bestrahlung im Innern des Films entsteht, wenn sich dieser, nach Verschiebung der Flüssigkeitsschichten, in einem Zustand grösster Dehnung und geringster Stärke befindet.

Durch die Einwirkung der Verschiebungskräfte ist andererseits eine Wanderung des flüssigen Films durch die einzelnen Bereiche des gesamten Trägers zu beobachten.

Wenn sich ein Teil der Flüssigkeit in Dampf verwandelt immer weiter entfernt, verstärkt sich die Wölbung der Flüssigkeit an den Randzonen der freien Zwischenräume, wodurch eine Kraft entsteht, die versucht, die Flüssigkeit aus den inneren Bereich des leeren Zwischenraums zu den Randzonen hin abzuziehen. Je weiter die Verdampfung fortschreitet (in Bruchteilen von Sekunden gerechnet), desto stärker wölbt sich der Meniskus, bis schliesslich die Kohäsionskräfte des Films dem Nullpunkt zustreben, sodass der Film im Augenblick der maximalen Dampfabgabe reisst. Auf diese Weise werden die einzelnen Zwischenräume des Trägers vorübergehend frei, das Zusammenspiel der Zentrifugal-, Kapillar- und Grenzflächenkräfte bewirkt jedoch, dass sich der Film automatisch wieder verteilt und dabei die inzwischen frei gewordenen Zwischenräume erneut besetzt; dies erfolgt in Abhängigkeit von der Kegelsteigung des Trägers, und zwar immer auf niedrigerer Ebene im Bezug auf den oberen Rand des Verdampfers.

Mit jedem Bruchteil Flüssigkeit, der sich in Form von Dampf von der Oberfläche des Films ablöst, entsteht ein momentanes Oberflächen-Ungleichgewicht in der Kontinuität des Filmprofils. In Wirklichkeit jedoch kommt dieses Ungleichgewicht in einer leichten, periodischen Wellung des Films zum Ausdruck, da dieser immer sofort wieder ergänzt wird durch Flüssigkeit, die aus den oberen Bereichen des Verdampfers stetig nach unten strömt.

Es stellt sich so ein Gleichgewicht ein zwischen der Verdampfungsgeschwindigkeit, von der die Grösse der Verdampfungsflächen abhängt, in Verbindung mit der aufgenommenen Wärmeenergie einerseits und der Geschwindigkeit, mit welcher der flüssige Film durch Verschiebung erneuert wird; diese hängt von der Viskosität, den Adhäsionskräften, Kapillarkräften u.s.w. ab. Da die Drehgeschwindigkeit des Verdampfers verstellbar ist, kann die Fliehkraft innerhalb gewisser Grenzen, die sich nach den oben genannten Anforderungen bestimmen, verändert werden.

Die Zufuhr von Wärmeenergie auf den äusseren Bereich des Verdampfers bewirkt die Entstehung einer Gegendruckzone zwischen der Wand des Destillators und jenem Aussenbereich des Verdampfers, der sich der Fliehkraft widersetzt, die auf den auf dem Träger verteilten Film einwirkt. Unter diesem Umständen stellt sich ebenfalls ein dynamisches Gleichgewicht ein, sodass die für die stetige Benetzung des gesamten Trägers erforderlichen Kapillar- und Adhäsionskräfte nicht beeinträchtigt werden.

Folgen wir nun dem Prozess des Phasenübergangs, so ist festzustellen, dass sich die Verdampfung flüchtiger Fraktionen über aufeinanderfolgende Bereiche des Trägers erstreckt und dabei einen schraubenförmigen Weg am Verdampfer entlang nach unten zurücklegt, d.h. ohne dass Überlagerungen zwischen den einzelnen Bereichen möglich sind; dies ist von erheblichem Vorteil im Hinblick auf eine rasche und wirkungsvolle Abscheidung der fraglichen Fraktionen, wobei einer möglichst begrenzten Kurve - der sogenannten Eliminationskurve - gefolgt wird.

Die Verdampfungsgeschwindigkeit wird ausschliesslich durch die Viskosität des flüssigen Films beeinflusst und gemässigt, die mit fortschreitender Verdampfung der leichtesten flüchtigen Fraktionen immer mehr ansteigt.

Sobald die Temperatur am Ende der Eliminationskurve einen bestimmten Grenzwert erreicht, wird die Verdampfung und damit auch die Destillation unterbrochen.

In diesem Stadium kommt es im unteren Grenzbereich des Verdampfers, d.h. dort, wo durch den vergrösserten Durchmesser die Wirkung der Fliehkraft am grössten ist, zu einer maximalen Beschleunigung des Films, der sich so über die Grenzen des Trägers hinaus verschiebt und den der Wärmebestrahlung ausgesetzten Bereich, also am Boden des Verdampfers, verlässt.

Die Kurve der progressiven Fliehkraft muss daher also der Kurve der progressiven Stärke des nicht destillierten, von flüchtigen Fraktionen befreiten Flüssigkeitsfilm folgen, damit er aufgefangen werden kann.

Dabei ist zweckmässigerweise zu berücksichtigen, dass die Zusammensetzung der Flüssigkeit - die sich dem Träger entlang von oben nach unten ausbreitet - je nach Höhe des Verdampfers und mit fortschreitender Destillation auf den verschiedenen Ebenen des Trägers nicht immer die gleiche ist.

Tatsächlich ist bei einer gegebenen Temperatur auch die Verdampfungsgeschwindigkeit auf den aufeinanderfolgenden Ebenen nicht gleich: Sie ist im oberen Bereich, wo der Anteil flüchtiger Fraktionen am grössten ist, schneller und wird nach unten hin allmählich immer langsamer, da in den unteren Bereichen der Anteil nicht flüchtiger Fraktionen ebenfalls allmählich immer mehr zunimmt.

Mit dem erfindungsgemässen Destillierverfahren ist also eine besonders ausgewogene Verdampfung möglich, die hinsichtlich des Phasenübergangs optimale Bedingungen für den verdampfenden Flüssigkeitsfilm schafft.

Erhitzungssystem durch direkte Bestrahlung des Verdampfers mit Mikrowellen

Ein ganz wesentlicher Faktor für die Vorgänge des Phasenübergangs im Rahmen des Verdampfungssystems, das für das erfindungsgemässe Verfahren vorgeschlagen wird, ist die Erhitzung mit Hilfe von Mikrowellen.

Vor allem muss daran erinnert werden, dass die Wärme hierbei direkt im Innern der bestrahlten Substanz erzeugt wird, sodass im Vergleich zu den herkömmlichen Systemen eine erhebliche Verkürzung der Erhitzungszeiten erzielt wird.

Dabei ist zu berücksichtigen, dass gerade organische Stoffe mit relativ hohem Molekulargewicht, die ja Hauptgegenstand dieses Destillierverfahrens sind, eine sehr niedrige Wärmeleitzahl aufweisen. Insbesondere bei pflanzlichen Ölen - deren Destillation grosse Aufmerksamkeit erfordert - ist eine Wärmeleitzahl in der Grössenordnung von 0,0004 kal/cm2/s/°C/cm gegeben.

Bei einer Bestrahlung Mikrowellen erstreckt sich die Wärmezufuhr über die gesamte Filmstärke unter vielfältigen Winkeleinfällen und wirkt sich sofort auf die Gesamtheit der molekularen Anziehungskräfte, einschliesslich der auf den inneren Bereich des Films gerichteten Kräfte, d.h. auf die Oberflächenspannung, aus.

Das Phänomen der Verdampfung ereignet sich damit praktisch auf allen Ebenen der einzelnen Flüssigkeitsschichten, die die Stärke des Films ausmachen, da die Wärmezufuhr ein ausreichend hohes Vibrations-, Dreh- und Bewegungsniveau der Moleküle bewirkt, sodass der Übergang von der Flüssig- in die Dampfphase, insbesondere an der Oberfläche der Flüssigkeit, innerhalb kürzester Zeit vonstatten geht.

Die Stärke des verdampfenden Films strebt folglich - insbesondere in der Mitte des Meniskus, der sich in den leeren Zwischenräumen des Trägers bildet - einem Mindestwert von nur wenigen Molekülen zu. Eben dieser Umstand ist die Voraussetzung für eine maximale Verdampfungsgeschwindigkeit.

Die Erneuerung des Films auf dem Verdampfungsträger wird erheblich beschleunigt und führt zu einer Beschleunigung des gesamten Verdampfungsvorgangs, was wiederum eine Verkürzung der Durchlaufzeit der zu destillierenden Substanz im Verhältnis zur festgesetzten Höchstzeit bewirkt. Auf diese Weise sind lokale Erhitzungen ausgeschlossen, da die Verdampfung praktisch gleichzeitig mit der Bestrahlung erfolgt.

Ein weiterer wesentlicher Aspekt beim Einsatz von Mikrowellen im Rahmen des erfindungsgemässen Verfahrens besteht darin, dass der Mikrowellenfluss nicht nur den flüssigen, auf dem Verdampfungsträger befindlichen Film trifft, sondern auch die sich davon lösenden Dämpfe. Tatsächlich ist der Träger für Mikrowellen durchlässig, der bestrahlte Flüssigkeitsfilm stellt somit keine absolut undurchlässige Abschirmung für den Durchgang der Strahlen dar, sondern er erlaubt es ihnen, während des Phasenübergangs auch im Innern der sich ablösenden Dämpfe zu wirken.

Dieser Umstand erweist sich als ausserordentlich wichtig für die Vorgänge, die sich beim Wärmeaustausch des Phasenübergangs abspielen.

Nach der Maxwell-Bolzmann'schen Beziehung ist die mittlere Geschwindigkeit der Moleküle eine Funktion der Temperatur. Da andererseits die Wärmeleitfähigkeit der Dämpfe nicht allein ihrer spezifischen Wärme sondern auch der mittleren Geschwindigkeit sowie der mittleren freien Weglänge der Moleküle proportional ist, wird verständlich, wie wichtig der Wärmeaustausch im Inneren der Dampfströmungen ist.

In anderen Worten: Wie gross auch immer die Wärmezufuhr ist, die diese Dämpfe von den Mikrowellen erhalten, so bewirkt sie doch eine Beschleunigung der mittleren Geschwindigkeit der Moleküle und damit letzten Endes eine Beschleunigung des Phasenübergangs. Damit ist jede Möglichkeit ausgeschlossen, dass sich ein Zustand des Halbgleichgewichts zwischen Dampf und Flüssigkeit einstellen und ein Teil der Halbdämpfe sich zurückverwandeln und wieder in die Oberfläche des flüssigen Films zurückkehren könnte.

In dieser Hinsicht geht der Destillationsvorgang kontinuierlich und beschleunigt vonstatten, womit mengenmässig eine grössere Ausbeute an Destillaten pro Zeiteinheit verbunden ist.

Aus den obigen Ausführungen geht hervor, dass von den thermischen Vorgängen sämtliche Molekularschichten betroffen sind, und zwar innerhalb eines Zeitraums, der mit der Bestrahlung durch Mikrowellen zusammenfällt.

Betrachtet man die Struktur des Verdampfungsträgers in Zusammenhang mit dem hier zum Einsatz kommenden Erhitzungssystems durch Mikrowellen, so lassen sich folgende Schlüsse ziehen:

- Da der Verdampfungsträger für Mikrowellen praktisch durchlässig ist, bleibt die Möglichkeit einer Überhitzung desselben infolge der Bestrahlung ausgeschlossen. Es gelten somit für ihn die gleichen thermischen Bedingungen wie für den flüssigen Film, der einen Teil der Kalorien durch Wärmeleitung an ihn abgibt.

- Die Einwirkung der Mikrowellen erfolgt unter allen Winkeln des Trägers und auch auf den Film selbst, dem so auf höchst wirksame Weise Wärme zugeführt wird.

- Die Wärmezufuhr der Mikrowellen erreicht ihren maximalen Wirkungsgrad dort, wo sich die freien Zwischenräume des Trägers befinden; hier entsteht eine Dehnung (Stretching) des Films, wobei sich bikonkave Menisken bilden und die Stärke des Films in der Mitte auf ein Minimum reduziert wird. Dadurch wird ein hoher Verdampfungswert erreicht.

- Die beständige Erneuerung und Wanderung des Films auf dem Träger - er gleitet dabei schraubenförmig von oben nach unten - gewährleistet eine optimale und permanente Bestrahlung mit Mikrowellen, was die Abscheidung flüchtiger Fraktionen innerhalb kürzester Zeit begünstigt. Im Verhältnis zu der verdampfenden Oberfläche bewegen sich die Moleküle also relativ schnell, sodass in dieser Hinsicht eine hohe Verdampfungsziffer erreicht wird. Auf diese Weise kommt es zu einer raschen und kontinuierlichen Erneuerung der Molekularschicht an der Oberfläche des Films, was zu einer beschleunigten Verdampfung und relativ verkürzten Verweilzeit der Flüssigkeit auf der Oberfläche des Verdampfers führt. Diese Beschleunigung ermöglicht es letzten Endes, die Amplitude der Eliminationskurve flüchtiger Fraktionen erheblich zu reduzieren.

- Durch die oszillierende Wellenbewegung, die das Profil des flüssigen Films auf dem Träger ausführt, entsteht ein dynamisches Wirbelsystem in Raum und Zeit. Die Einwirkung der Mikrowellen erfolgt daher auf unterschiedlichen Energiestufen der Moleküle hinsichtlich Vibrationen bzw. Raster und Bewegung, wobei je nach Beschaffenheit der Bestandteile, aus denen sich die bestrahlte Substanz zusammensetzt, gleichzeitig mehr oder weniger starke Beanspruchungen im Innern der Moleküle hervorgerufen werden.

Polarisationserscheinungen, wie sie bei Einwirkung von Mikrowellen auf Nichtleiter typisch sind, befinden sich somit weitestgehend unter ständiger Kontrolle und erklären somit bei den hier auftretenden hohen Frequenzen die grösstmögliche Wärmeleistung im Verhältnis zum angewandten elektrischen Feld.

Die in Wärme übergehende Leistung nähert sich somit also dem Wert der in Form von Mikrowellen ausgestrahlten Leistung, was bedeutet, dass ein optimaler Nutzungsgrad der Energie erreicht wird.

- Die von den Mikrowellen im Innern der Moleküle hervorgerufene Wärmerührung bei einer bestimmten Temperatur in Abhängigkeit von der Bestrahlungsleistung innerhalb eines vorgegebenen Zeitraums bleibt auf den für die Verdampfung einer bestimmten flüchtigen Fraktion (oder Fraktionengruppe) erforderlichen Wert beschränkt, ohne dass damit eine Überhitzung infolge der Wärmeträgheit des Systems verbunden wäre. Die Temperaturbereiche bzw. Temperaturschwankungen halten sich daher in sehr engen Grenzen und ermöglichen eine präzise Bestimmung einzelner Trennungsstufen.

Dieser Umstand erweist sich als ausserordentlich bedeutsam für die Probleme einer Trennung im Kurzweg-Destillierverfahren, da bei dieser Art von Destillation nur ein Trennungsgrad, beschränkt auf ein einziges theoretisches "Plateau" vorgesehen ist.

Bei einem Kurzweg-Destillator herkömmlicher Art ist es dagegen praktisch unmöglich, präzise Trennungsgrenzen festzulegen, da die erwärmte Flüssigkeit und das in Destillation befindliche Produkt unterschiedliche Temperaturen aufweisen. So ist die Temperatur der erwärmten Flüssigkeit immer höher bei diesen Geräten, was zu einer Wärmeträgheit der Wand führt, die zwangsläufig auf die zu destillierende Flüssigkeit übertragen wird. Nach erfolgter Trennung der leichten Fraktionen kommt es folglich zu einer Mitnahme weniger leichter Fraktionen, die bei der Temperatur der Überhitzung selbst verdampfen.

Damit erweitert sich die Eliminationskurve der leichten, flüchtigen Fraktionen mit dem Nachteil, dass sie nun auch einen Teil eventuell unerwünschter Substanzen umfasst.

- Ganz allgemein ist der flüssige Film einer Reihe von Kräften unterworfen, die bestrebt sind, ihn in einen Zustand maximaler räumlicher Ausdehnung zu versetzen und ihm folglich die Tendenz zu verleihen, einen Grenzzustand minimaler Molarkohäsion einzunehmen, was einen grösseren Energiegehalt mit sich bringt. Dies wiederum ermöglicht eine maximale Wärmebindung pro Mengeneinheit bestrahlter Substanz sowie eine maximale Verdampfungsgeschwindigkeit.

Dieser Zustand räumlicher Ausdehnung des mit Mikrowellen bestrahlten Films bietet die Möglichkeit einer Destillation durch Verdampfung, ohne dass je der Siedepunkt der Flüssigkeit erreicht wird.

In dieser Hinsicht kann nicht allein Energie eingespart werden, es besteht auch die Möglichkeit, die Destillation bei niedrigeren als den vorgegebenen Temperaturen durchzuführen, oder aber, die Temperaturen beizubehalten und durch Erhöhung des Drucks das Restvakuum im Destillator neu einzustellen; damit kann die Verdampfungsgeschwindigkeit noch weiter erhöht werden.

- Die zulässige Verdampfungsgeschwindigkeit der einzelnen Molarschichten, die sich an der Oberfläche beständig erneuern, liegt weit über jener Geschwindigkeit, bei welcher der Film durch Flüssigkeitsansammlung in einem Bereich des Trägers eindicken könnte.

Diese Bemerkung ist deshalb so wichtig, weil darin der wesentliche Unterschied zwischen dem erfindungsgemässen Destillierverfahren und dem herkömmlicher Destillierapparate deutlich wird, wo der flüssige Film an einer feststehenden, senkrecht angeordneten Wand herabfliesst, über die ein System zentrifugal expandierender Walzen streicht, um so die Flüssigkeit in dünner Schicht auf der Wand zu verteilen. Unter diesen Umständen kommt es im oberen Bereich der Walzen zu saumartigen Verdickungen in waagrechter und senkrechter Richtung auf der Wand, was ganz offensichtlich nicht mit der Forderung nach einem gleichmässigen Profil des Films vereinbar ist.

Eine solche Unregelmässigkeit des Films kann im Verlauf des Verdampfungsprozesses zu Störungen der Diffusionserscheinungen und folglich zu einer Verminderung der Verdampfungsgeschwindigkeit führen, da es beim Durchlauf der Walzen zu einer Vermischung der übereinander gelagerten Schichten des Films kommt. Die Folge hiervon ist eine Störung der mittleren freien Weglänge der verdampfenden Moleküle, von der auch die molekularen Stoffwanderungen durch die einzelnen Schichten des Films in Richtung Oberfläche betroffen sind, sodass die Filmoberfläche durch den Durchlauf der Walzen beeinträchtigt wird.

Der abwechselnde Durchlauf der Walzen über die Wand stellt andererseits auch eine Behinderung für den "ausgelaugten", nicht destillierten Film dar, der sich nicht frei nach unten auf den unteren Wandbereich zu verschieben kann, während gleichzeitig das kontinuierliche Nachfliessen frischer flüchtiger Fraktionen gebremst wird. Tatsächlich wird die Wanderung des Films auf der Wand in diesem Falle ausschliesslich durch Schwerkraft bewirkt.

Im Hinblick auf die vermehrt auftretenden, nicht destillierten Fraktionen kann am Ende festgestellt werden, dass der nach unten abfliessende, ausgelaugte Film aufgrund der so langsam vonstatten gehenden Abwärtsbewegung mit Strömungen aus den oberen Bereichen der Wand durchsetzt ist.

Eine derartige Vermischung wirkt sich immer nachteilig auf den Destillationsvorgang aus, da eine Abscheidung der in dieser Mischung enthaltenen flüchtigen Fraktionen ohne eine (ansonsten unerwünschte) relative Temperaturerhöhung nicht möglich ist, wobei diese Temperaturerhöhung wiederum eine Funktion der zunehmenden Filmstärke darstellt, obschon die Verteilerwalzen beim Verstreichen der Flüssigkeit einen relativen Druck auf die Wand ausüben.

Ausgehend vom hier beschriebenen Destillierverfahren anhand eines sogenannten Pilot-Destillators werden insbesondere die Verdampfer industrieller Destillatoren in Abhängigkeit von den jeweils zu destillierenden Produkten untersucht und bemessen, wobei in diesem Zusammenhang angestellte Betrachtungen auch für Kondensatoren gelten.

Im Normalfall bestehen derartige Destillierapparate aus mehreren Verdampfer-Stufen, deren Höhe sich jeweils nach dem fraglichen Produkt berechnet. Jede dieser Stufen stellt eine gesonderte Destilliereinheit dar. Am Unterbau des Destillators werden nur die kondensierten und nicht destillierten Fraktionen zusammengeführt.

Im bestimmten Fällen allerdings besteht die Möglichkeit, die kondensierten Fraktionen am nicht abgekühlten Kondensator (hot condenser) einer jeden Stufe aufzufangen und sie auf der unteren Stufe einer erneuten Destillation zuzuführen, wobei sie im Hinblick auf eine Fraktionierung als partieller Rückfluss eingesetzt werden. Unter diesen Umständen funktioniert der Destillator wie eine Fraktionierkolonne, mit der reinere Destillate erzielt werden können.

Was die Konstruktion des Destillators betrifft, so besteht er aus einem zylindrischen Körper aus rostfreiem Stahl vom Typ AISI 316 mit mehreren, auf der Höhe der Verdampfer in der Wand angeordneter Bullaugen aus Pyrexglas, durch die die Mikrowellen hindurchgelassen werden.

Die Mikrowellengeneratoren, d.h. die Magnetrone, sind aussen angebracht und werden direkt an die in die Wand des Destillators eingelassenen Bullaugen aus Pyrexglas über einen geeigneten Wellenleiter angeschlossen. Auf diese Weise können erforderlichenfalls unterschiedliche Temperaturen für die einzelnen Stufen eingestellt werden, was sich vor allem beim Fraktionieren als besonders vorteilhaft erweist.

Diese Anordnung der Magnetrone ermöglicht eine optimale Leistung ohne parasitäre Streuungen sowie eine hohe Konzentration des Mikrowellenflusses mit ausserordentlich präziser Richtwirkung.

Bei einem erfindungsgemäss durchgeführten, industriellen Destillierverfahren unterscheidet man die im folgenden beschriebenen vier Verfahrensschritte:

Entgasung, Dehydratisierung und Anwärmung des Rohprodukts

Das Rohprodukt wird über den Temperaturwandler ET herangepumpt und durchströmt den Lastregler FR1 in Mikrowellen-Vorwärmer "A", wobei je nachdem ein Restdruck zwischen 50 und 5 mm/Hg beibehalten wird.

Der Vorwärmer funktioniert nach dem gleichen Prinzip wie auch der eigentliche Destillator.

Das in dünner Schicht auf dem "Rotor" verteilte Rohprodukt wird entgast, dehydratisiert und langsam auf eine mit dem Trennungsvorgang im nächsten Zyklus zu vereinbarende Temperatur gebracht.

Das so entzogene Kondenswasser wird über die Leitung 1 zum Sammelbehälter S1 abgeführt.

Vorwärmer und Sammelbehälter S1 sind an eine Roots-Vakuumpumpe PVR angeschlossen.

Filtrierung - Abscheidung erster leichter Fraktionen - Aufwärmung des Restprodukts

Das entgaste und dehydratisierte Rohprodukt wird zu dem unter Vakuum stehenden Filter F1 gepumpt, wo eventuell vorhandene feste Verunreinigungen abgeschieden werden.

Vom Filter wird das gereinigte Produkt über den Lastregler FR2 zum ersten Destillator "B" gepumpt, wo die für die Destillation der ersten leichten Fraktionen erforderliche Temperatur erreicht wird.

Der hier angewandte Restdruck ist abhängig von der Ansprechempfindlichkeit des Produkts auf die fragliche Temperatur und kann von Fall zu Fall zwischen 1 und 10 mm/Hg eingestellt werden.

Die kondensierten Fraktionen werden über die Leitung 2 abgeführt und zu den Lagerreserven gepumpt.

Der Destillator ist an einen Vakuumpumpenblock (Diffusions- und Rotationspumpe) PVD 1 angeschlossen.

Abscheidung letzter leichter Fraktionen und Vorwärmung des Produkts im Hinblick auf die endgültige Destillation

Das aus dem Destillator "B" kommende, von den ersten leichten Fraktionen befreite Produkt wird nun zum zweiten Destillator "C" gepumpt, wo es eine weitere Temperaturerhöhung erfährt.

Eine zweite Destillation schwererer Fraktionen erfolgt in Abhängigkeit von der jeweiligen Temperatur.

Der Restdruck im Destillator ist abhängig von der Ansprechempfindlichkeit des Produkts auf die fragliche Temperatur und kann dementsprechend bis auf $5 \cdot 10^{-3}$ mm/Hg eingestellt werden.

Der Destillator scheidet nicht nur die schwereren Fraktionen ab, sondern er übernimmt auch die Funktion eines Vorwärmers im Hinblick auf die im nächsten Zyklus durchzuführende Destillation. Tatsächlich liegt die hier erreichte Temperatur nur knapp unter der für den folgenden Zyklus vorgesehenen Temperatur.

Die kondensierten Fraktionen werden über die Leitung 3 abgeführt und zu den Lagerbehältern gepumpt.

Der Destillator ist an einen Vakuumpumpenblock (Diffusions- und Rotationspumpe) PVD 2 angeschlossen.

Hauptdestillation des Produkts

Das aus dem Destillator "C" kommende Produkt wird nun zum dritten Destillator "D" gepumpt, wo die erforderliche Temperatur zur Destillation des Produkts erreicht wird.

Der hier angewandte Restdruck schwankt im allgemeinen zwischen 1.5/1.8. $10^{-3}$ und $1.10^{-3}$ mm/Hg.

Die hier kondensierte Fraktion sowie der nicht destillierte Rückstand werden über die Leitungen 4 bzw. 5 abgeführt und zu den Lagerbehältern gepumpt.

Der Destillator ist an den Vakuumpumpenblock PVD 2 angeschlossen.

Zur näheren Erläuterung der bisherigen Beschreibung soll nachfolgend ein praktisches Anwendungsbeispiel des erfindungsgemässen Verfahrens dargestellt werden, das die Destillation pflanzlicher Öle im Hinblick auf deren Raffinierung zum Gegenstand hat.

BEISPIEL

Bei den herkömmlichen Verfahren der Speiseölraffinierung sind nacheinander folgende Arbeitsgänge durchzuführen:

- Entsäuerung bzw. Bindung des freien Säuregehalts mit Hilfe von verdünntem Ätznatron (chemisches Verfahren), was im allgemeinen dann zur Anwendung kommt, wenn es sich um ein Rohöl mit geringem Säuregrad handelt, oder aber auf dem Wege einer direkten Destillation der Fettsäuren (physikalisches Verfahren), sofern das Rohöl einen hohen Anteil freier Säuren enthält;

- Entfärbung mit Fossilerde und Aktivkohle;

- Geruchentfernung im Vakuum und unter Dampfstrahl.

Mit den oben genannten Verfahrensschritten sind folgende Nachteile verbunden:

- erhebliche Verluste:

a) Entsäuerung mit Ätznatron: Hier ist mit einem Verlust entsprechend der doppelten Menge an freien Fettsäuren zu rechnen.

b) Entfärbung: Ölverlust entsprechend dem Gewicht der zum Einsatz kommenden Fossilerde bzw. Aktivkohle.

c) Geruchentfernung: unterschiedlich hohe Verluste durch Mitnahme von Öl zusammen mit flüchtigen Substanzen und Dampf.

- relativ grosser Zeitaufwand für die einzelnen Verfahrensschritte;

- hohe Energiekosten;

- arbeitsintensives Verfahren;

- lange Wartezeiten, da die einzelnen Verfahrensschritte nicht kontinuierlich aufeinanderfolgen und Pausen eingelegt werden müssen;

- teilweise Verfälschung der Produkte durch: Isomerisationen, Abbau bestimmter Bestandteile, so z.B. Vitamine, Esterole u.s.w.;

- hohe Herstellungskosten.

Mit der Anwendung des erfindungsgemässen Verfahrens ist die Möglichkeit einer direkten Behandlung des zuvor gefilterten, entschleimten und deshydratisierten Rohöls gegeben.

Auf verschiedenen Stufen, d.h. unter Einsatz mehrerer in Reihe geschalteter Apparate, jedoch im Rahmen eines kontinuierlichen Verfahrens kann so eine komplette Raffination des Rohöls durchgeführt werden.

Praktisch handelt es sich dabei um folgende Stufen:

- Geruchentfernung und Entsäuerung

In einem ersten Destillationsdurchgang werden die flüchtigen Fraktionen der nicht verseifbaren Substanz abgeschieden, die zu einem grossen Teil für Gerüche und schlechten Geschmack verantwortlich sind. Gleichzeitig wird auch die freie Säure gebunden und es werden die Fraktionen der Mono- und Diglyceride, die Karotinpigmente und allgemein alle flüchtigen Fraktionen innerhalb des vorgesehenen Temperaturbereichs ausgeschieden.

Dieser Durchgang erfolgt in der Praxis unter Einsatz von zwei in Reihe geschalteten Destillatoren, die jeweils mit unterschiedlichen Temperaturen arbeiten.

Das nicht destillierte Produkt stellt den Hauptanteil der im Öl enthaltenen Triglyceride dar.

In manchen Grenzfällen, falls das Rohöl ganz bestimmte, besondere Eigenschaften aufweist bzw. sich in verdorbenem zustand befindet, muss entweder ein Recycling oder auch eine ca. 1/4-stündige Geruchentfernung unter Einsatz eines Dampfstrahls durchgeführt werden. Unter keinen Umständen wird die Endqualität des Öls durch diese ergänzende und zeitlich begrenzte Behandlung beeinträchtigt.

- Reinigung der Hauptfraktion des Öls

Das in der vorausgehenden Stufe von den flüchtigen Fraktionen befreite Öl wird nun bei einer Temperatur von ca. 260°C unter Vakuum von 10 mm/Hg destilliert.

Der nicht, destillierte Rückstand besteht aus Triglyceridoxyden, Chlorophyll-pigmenten, Harzstoffen und allgemein aus allen hochmolekularen, nicht verseifbaren Substanzen.

Je nach Qualität des Öls kann dieser Verfahrensschritt in einem einzigen Durchgang oder aber mit Recycling durchgeführt werden.

Diese Art von Raffination bietet folgende Vorteile:

- minimale Verluste, die sich praktisch auf die auszuscheidenden Produkte beschränken;

- verkürzte Verfahrenszeiten, da der Durchgang durch die einzelnen Destillatoren ausserordentlich rasch erfolgt;

- Ausschaltung sämtlicher Wartezeiten, da es sich um ein kontinuierliches Verfahren handelt;

- geringe Energiekosten durch verkürzte Verfahrenszeiten und Einsatz hochleistungsfähiger Heizmittel in Form von Mikrowellen;

- wenig arbeitsintensives Verfahren, das manuelle Eingriffe nur in beschränktem Masse erforderlich macht;

- niedrigere und beschränkte Herstellungskosten;

- verbesserte Qualität der Endprodukte, da diese keinerlei Veränderung erfahren und von oxydierten und anderen unerwünschten Fraktionen befreit sind;

- grössere Gewinne infolge niedrigerer Herstellungskosten, grösserer Ausbeute und Aufwertung der erzielten Endprodukte;

- in ökologischer Hinsicht ist eine Luftverschmutzung ausgeschlossen, da sämtliche Verfahrensschritte unter Vakuum vorgenommen werden.

Auch eine Verseuchung durch Abwässer bzw. Chemikalien ist nicht möglich, da das Verfahren ausschliesslich auf physikalischen Vorgängen beruht.

Besondere Anwendung bei der Raffination von Olivenöl

Das Problem der Olivenölraffination ist deshalb besonders wichtig, weil es hier darum geht, die für das Öl typischen qualitativen Eigenschaften weitestgehend zu erhalten.

Jede längere Wärmebehandlung, wie sie üblicherweise eingesetzt wird, führt zu erheblichen Veränderungen in der Glyceridstruktur. Das gleiche gilt auch für die Behandlung mit Bleicherden, die isomerische Umlagerungen zur Folge hat.

Andererseits ist es bei den herkömmlichen Raffinationsverfahren nicht möglich, innerhalb akzeptabler Grenzen und unter Einsatz von Lösungsmitteln wie Erythrodiol, Ovanol und dergl. ganz bestimmte unverseifbare Substanzen abzuscheiden, wie sie z.B. in Extraktionsölen enthalten sind.

Unter diesen Umständen weichen die raffinierten Öle in ihren qualitativen Eigenschaften ganz erheblich von denen naturbelassener Öle ab, was letzlich zu einer Minderung ihres kommerziellen Wertes führt.

Mit dem erfindungsgemässen Verfahren dagegen ist die Möglichkeit gegeben, die Raffination der Öle unter optimalen Bedingungen, bei niedrigen Temperaturen und innerhalb kürzester Zeit durchzuführen. Auch können hier die meisten der unerwünschten Substanzen auf dem Wege der Destillation eliminiert werden.

Dadurch wird die Qualität verbessert, die ohnehin der mit herkömmlicher Raffination erzielten Qualität weit überlegen ist.

Insbesondere sind auch die Gefahren einer isomerischen Überlagerung sehr viel geringer. Alles in allem weisen die so hergestellten Produkte einen sowohl in qualitativer als auch in kommerzieller Hinsicht höheren Wert auf.

Als Beispiel sind auf der folgenden Seite zusammenfassend die analytischen Ergebnisse für ein nach dem erfindungsgemässen Verfahren raffiniertes Tresteröl wiedergegeben.

Es handelt sich dabei um richtungweisende Resultate. So ist beispielsweise hinsichtlich des freien Säuregehalts die Möglichkeit gegeben, durch Recycling einen Prozentsatz von weniger als 0,10 % zu erzielen.

Geht man von einem Rohöl mit niedrigem Säuregrad aus, so ist im Endergebnis ein Säuregehalt von weniger als 0,07 % möglich.

Ergebnisse der Analyse eines nach dem erfindungsgemässen Verfahren raffinierten Tresteröls

Ergebnisse der Analyse eines nach dem erfindungsgemässen Verfahren raffinierten Tresteröls

ROHÖL                                        RAFFINIERTES ÖL


Unverseifbare Substanzen:


Esterole:

- Erythrodiol              0,112 %          0,006 %
  (20 %/Esterole)                                      (4 %/Esterole)
- Beta-Sitosterol    )
- Stigmasterol       )
- Campesterol        )
- Ursendiol          )    0,448 %          0,144 %

                          0,560 %          0,150 %


Sonstige:

- Gires              )
- Harze              )
- Pigmente           )
- K.W.-Stoffe        )
- Aldehyde           )
- Acetone            )
- u.dergl.           )    2,240 %          0,672 %
                              2,8 %              0,822 %
- Säuregrad (in % Ol.-Öl)     5,4 %              0,27 %
- Brechungszahl:   (25° C)    1,468              1,4665

- UV-Spektrometrie:

  K 232                       5,8                2,650
  K 268                       1,7                0,410
  Delta K                     0,18               0,080


11

| ROHÖL | | RAFFINIERTES ÖL |
|---|---|---|
| - Bellier/Carocci/Buzi-Test: | | negativ |
| - Bellier-Zahl: | | 14° C |
| - Elaidinsäuregehalt: | 0,15 | Spuren |
| - GARDNER-Farbe: | | 3 |

BESCHREIBUNG DER STANDARDAUSFÜHRUNG DES PILOT-DESTILLATORS UND SEINER NEBENGERÄTE

### Eigentlicher Destillator

Das äussere Gehäuse des Destillators besteht aus:

- **Oberteil:**
  - Zylinder aus Pyrexglas

| | |
|---|---|
| - Aussendurchmesser | 225 mm |
| - Höhe | 50 mm |
| - Zylinderstärke im Zentrum | 7 mm |

- **Unterteil:**
  - Zylinder aus rostfreiem Stahl Typ AISI 316

| | |
|---|---|
| - Aussendurchmesser | 280 mm |
| - Höhe | 50 mm |
| - Stärke der Platte | 5 mm |

Ober- und Unterteil sind über ein verdübeltes Plattensystem mit einer hermetischen Zwischendichtung aus speziell für Hochvakuum geeignetem Viton-Aluminium miteinander verbunden.

Über dem oberen Bereich des Pyrexglas-Zylinders ist eine Kuppel aus rostfreiem Stahl vom Typ AISI 316 angeordnet, die über das gleiche verdübelte Plattensystem einschl. hermetischer Zwischendichtung aus speziell für Hochvakuum geeignetem Viton-Aluminium mit dem Zylinder verbunden ist.

| | |
|---|---|
| - Aussendurchmesser | 225 mm |
| - Höhe | 50 mm |
| - Stärke der Platte | 5 mm |

Über dem unteren Bereich des Zylinders aus rostfreiem Stahl ist eine ebenfalls aus rostfreiem Stahl vom Typ AISI 316 bestehende Kuppel angeordnet, die über ein verdübeltes Plattensystem mit hermetischer Zwischendichtung aus speziell für Hochvakuum geeignetem Viton-Aluminium mit dem Zylinder verbunden ist.

| | |
|---|---|
| - Aussendurchmesser | 280 mm |
| - Höhe | 60 mm |
| - Stärke der Platten | 15 mm |

Im Innern des Verdampfers sind von aussen nach innen folgende Elemente angeordnet:

- Träger des rotierenden Verdampfers, der im oberen Bereich aus einer Scheibe aus rostfreiem Stahl vom Typ AISI 316 besteht, die in der Mitte an der ihrerseits mit dem Motor verbundenen Transmissionswelle befestigt ist.

4 in gleichem Abstand zueinander angeordnete Streben sind mit dem Aussenrand der oberen Scheibe verdübelt, während ihr unteres Ende auf einer kreisförmigen, mit einem Kugellager verbundenen Unterlage verschraubt ist. Das Kugellager wird gestützt von einer direkt mit der Wand des unteren Zylinders des Destillatorgehäuses verschweissten Verzahnungskrone.

Am oberen Ende der Streben sind Gleitringe angeordnet, die mit der kreisförmigen Befestigungsunterlage des Verdampferelements verbunden sind.

Am inneren Tangentialumfang der Gleitringe ist der Rundverteiler für die zu destillierende Rohflüssigkeit angebracht. Der untere Teil des Destillators ist so angeordnet, dass die Flüssigkeit tangential in Richtung auf das Verdampferelement geschoben wird.

Unten an den Streben befindet sich ein Kranz aus gelochtem, rostfreiem Stahl, auf dem ein ebenfalls aus rostfreiem Stahl bestehender Rundgürtel sowie ein relativer Gegen-Befestigungsgürtel befestigt ist, der das Verdampferelement fest abschliesst.

Zwischen oberem und unterem Bereich der Streben befindet sich auf den oben beschriebenen Befestigungselementen der Körper des eigentlichen Verdampfers, der in diesem Fall aus einem starren Gewebe aus teflonbeschichteter Glasfaser besteht.

Die geometrische Form des Verdampfungsträgers entspricht einem Kegelstumpf. Die Seitenschräge des Verdampfers in Bezug auf die Rotationsachse beträgt 6°.

Seine Abmessungen sind folgende:

| | |
|---|---|
| - oberer Durchmesser | 160 mm |
| - unterer Durchmesser | 130 mm |
| - Höhe | 145 mm |

Die dreidimensionale Nutzfläche beträgt ca. 2.000 cm2.

Eine permanente Spannung des Gewebes wird durch Federn gewährleistet, die im unteren Bereich der an den Strehen befindlichen Gleitringen angeordnet sind. Diese Federn sind kraftschlüssig mit dem oberen runden Befestigungselement des Gewebes verbunden: Sie drücken daher das gesamte Gewebe senkrecht nach oben.

Im unteren Bereich des Verdampfers ist ein kraftschlüssig mit der oben erwähnten Krone aus gelochtem Gewebe verbundener, kreisförmiger Tropfenfänger für die nicht destillierten Fraktionen angeordnet, die in eine runde Metallwanne laufen, welche zur Wand des zum Destillatorgehäuse gehörigen Zylinders hin geneigt ist. Diese nicht destillierten Fraktionen werden über eine Öffnung in der Zylinderwand aus dem Destillator abgeführt in den unter Vakuum stehenden Lagerbehälter.

- Koaxial zum Verdampfer ist ein erster senkrechter, nicht gekühlter Dampfkondensator (hot condenser) angeordnet, der aus einem runden, doppelschichtig liegendem und gefaltetem Metallgewebe (aus rostfreiem Stahl vom Typ AISI 316 L) mit einer Gesamtstärke von 10 mm besteht, sodass ein kompakter Belag gegeben ist.

Das Metallgewebe besteht aus einem Gefüge ca. 0,15 mm starker Drähte. Das Gewebe wird gefaltet und gegenläufig nochmals gefaltet, sodass eine Reihe von 5 mm hohen Kanälen entsteht. Die Falten bilden einen Winkel von 45° in Bezug auf die Senkrechte. Die einzelnen Schichten liegen so übereinander, dass die Neigung der Falten jeweils in umgekehrter Richtung zu liegen kommt, wodurch zwischen den beiden Schichten zwei Gruppen von über Kreuz verlaufenden Kanälen mit dreieckigem Querschnitt und ca. 10 mm langen Seiten entstehen (Erzeugnis der Firma SULZER, SCHWEIZ).

Die kondensierte Flüssigkeit läuft in einer leichten Hin- und Herbewegung über die Fläche des Kondensatorbelags nach unten. Durch die Kapillarwirkung ihrer Textur ist diese Fläche ständig benetzt. Das Gewebe weist in regelmässigen Abständen angebrachte Öffnungen auf, durch die die Dämpfe von einer Schicht zur anderen gelangen und letztlich auch die leichteren Dämpfe, die sich nicht auf dem Metallgewebe verflüssigen, entweichen und so zum zweiten, gekühlten Kondensator abgeführt werden, der mit dem oben beschriebenen Belag in direkter Verbindung steht.

Die Krone des Belags aus Metallgewebe hat einen Aussendurchmesser von ca. 100 mm.

In diesem Zusammenhang ist darauf hinzuweisen, dass der fragliche Belag eine Abschirmung darstellt, die den Strahlenfluss der Mikrowellen bremst.

Koaxial zu diesem kreisförmigen Belag ist im zentralen Bereich des Destillators ein zweiter, durch Wasserumlauf gekühlter Kondensator angeordnet, der die Form einer doppelten, konzentrisch verlaufenden Serpentine aufweist. Die äussere Spirale steht in direkter Verbindung mit dem Metallgewebe des nicht gekühlten Kondensators.

Der Durchmesser der Serpentinengruppe beträgt insgesamt ca. 75 mm.

- Im Zentrum des Destillators ist die Transmissionswelle angeordnet, die sich über die gesamte Höhe des Apparats erstreckt. Die Transmissionswelle ist - über eine Spezialkupplung - mit einem rotierenden Mechanismus verbunden, der seinerseits im Aussenbereich des Destillators an einen Motor mit verstellbarem Drehzahlbereich (bis zu 500 Umdrehungen pro Minute) angeschlossen ist. Dieser zwischen Transmissionwelle und Motor angebrachte Rotationsmechanismus ist für Hochvakuum entsprechend abgedichtet und befindet sich im zentralen Bereich der unteren Kuppel, auf der er mit Hilfe einer verdübelten Spezialplatte befestigt ist.

Der Destillator ist mit Anschlüssen für die Zulaufleitung des zu destillierenden Rohprodukts sowie für die Abflussleitung des Destillats versehen. Auch sind entsprechende Anschlüsse vorhanden für die Zulauf- und Abflussleitungen des Kühlwassers für die Serpentinen.

An der Seitenwand des unteren Zylinders ist am Gehäuse des Destillators ein Anschluss mit einem Durchmesser von 63 mm für das Vakuumaggregat vorgesehen.

Am unteren Zylinder des Destillatorgehäuses ist ein Haltegestell angeschweisst.

## Erhitzung durch Mikrowellen

Der obere Teil des Destillators befindet sich im Innern eines Hohlraums, der bis zur unteren Grenze des Pyrexglas-Zylinders einer Bestrahlung mit Mikrowellen ausgesetzt ist.

Durch diesen Zylinder hindurch treffen die Mikrowellen rund ausstrahlend unter allen Winkeln auf die gesamte Oberfläche des Verdampfers auf.

Die Mikrowellen werden von zwei Magnetronen mit einer Leistung von 3 kW ausgestrahlt. Die Frequenz beträgt 2450 MHz.

Die Temperatur auf der Oberfläche des Verdampfers wird durch den Pyrexglaszylinder hindurch mit Hilfe eines elektronischen Fernmesssystems überwacht. Das Messgerät ist mit einem digitalen Temperaturanzeiger ausgestattet und besitzt zudem eine Thermostatengruppe, sodass die Magnetrone ausgeschaltet werden, sobald infolge der Mikrowellenbestrahlung die optimale Temperatur erreicht wird.

Um parasitäre Rückstrahlungen der Mikrowellen im Innern des Destillators zu vermeiden - die durch vorhandene Metallteilchen hervorgerufen werden - sind an geeigneten Stellen Elemente aus mikroperforiertem Gewebe als Abschirmung angebracht, die den Strahlenfluss der Mikrowellen bremst.

Es wurden alle üblichen Vorsichtsmassnahmen getroffen um zu verhindern, dass durch undichte Stellen Mikrowellen aus dem bestrahlten Hohlraum entweichen.

## Vakuumerzeugung

Das Vakuumaggregat umfasst eine leistungsstarke Diffusionspumpe (65 Liter pro Sekunde), mit der ein Restdruck von $10^{-3}$ mm/Hg erreicht werden kann.

Diese Pumpe ist an eine Rotationspumpe angeschlossen, deren Aufgabe darin besteht, das für Inbetriebnahme der Diffusionspumpe erforderliche Vorvakuum herzustellen.

Am Eingang zu dieser letztgenannten Pumpe befindet sich eine besondere, durch Flüssigkeitsstoss gekühlte "Sperre", die nicht kondensierbare Dampffraktionen aus dem Destillator abhält.

Überwachung und Messung des Vakuums erfolgt über ein an die Zähler angeschlossenes Vakuummmeter vom Typ Penning.

Nebengeräte des Destillators

Hierzu gehören:

- die Beschickungs- und Sammelbehälter für die Produkte;

- ein Flussmesser, mit dem die einströmende Menge des zu destillierenden Rohprodukts geregelt und überwacht wird;

- ein Mikrowellen-Vorwärmer für das Rohprodukt;

- Verbindungsleitungen und Absperrschieber für Produkte und Vakuum.

Schematische Darstellung des Funktionsprinzips

Das zuvor entgaste und dehydratisierte Rohprodukt wird durch das im gesamten Kreislauf herrschende Vakuum aus dem Beschickungsbehälter angesaugt und strömt durch den im Vorwärmer angeordneten Flussmesser, wobei es auf die vorgegebene Temperatur gebracht wird, die bereits nahe bei der Destillationstemperatur liegt.

Hat es den Vorwärmer verlassen, so wird es in den Rundverteiler des Destillators eingesaugt.

Infolge der auf den "Rotor" des Verdampfers einwirkenden Fliehkraft wird das Rohprodukt sofort in Form eines Films über die Fläche des Gewebes verteilt.

Durch die gleichzeitig erfolgende Bestrahlung mit Mikrowellen steigt die Temperatur auf den für die Destillation vorgesehenen Wert an.

Die Destillation setzt sofort ein.

Die dabei entstehenden Dämpfe werden am ersten, nicht gekühlten Kondensator, dessen Belag aus einem metallischen Mikrogewebe besteht, bzw. am zweiten, durch Wasserumlauf gekühlten Serpentinen-Kondensator verflüssigt.

Die Kondensate fallen infolge der Schwerkraft nach unten, wo sie getrennt aufgefangen und den jeweiligen Sammelbehältern zugeführt werden.

Die nicht destillierte Fraktion wird ebenfalls aufgefangen und dem Sammelbehälter zugeführt.

Sämtliche Sammelbehälter sind an den Hauptvakuumkreislauf angeschlossen.

Am Ende des Destillationsvorgangs wird der Vakuum-Anschlusschieber zwischen Destillator und Pumpenblock geschlossen und der Verbindungsschieber zur umgebenden Luft geöffnet.

Nachdem die Verbindung zwischen Sammelbehältern und Kreislauf unterbrochen ist, können nun die destillierten bzw. nicht destillierten Fraktionen entnommen werden.

## Destillierleistung

Sie berechnet sich nach folgender Gleichung:

$$G = 0,06 \cdot p \cdot \frac{M}{1}$$

G = g/cm2/s

P = Druck in mm/Hg = 0.001

M = Molekulargewicht der verdampfenden Flüssigkeit

T = absolute Temperatur

0.06 = Koeffizient, der die verschiedenen Masseinheiten (in Bezug auf die universelle Gaskonstante) berücksichtigt.

Im vorliegenden Fall ergibt sich also pro Stunde bei einer Fläche von 2.000 cm2:

C = 2.000 x 3.600"

Werkstoffe, Form, Grösse und Anordnung der einzelnen Elemente können geändert werden, soweit dadurch nicht das Wesen der Erfindung beeinträchtigt wird.

Die in der vorliegenden Patentbeschreibung verwendeten Ausdrücke sind stets in weiterem Sinne, nie einschränkend zu verstehen.

## Ansprüche

Zugunsten der Firma SPADIMWIS, S.A. werden hiermit die in den nachfolgenden Patentansprüchen enthaltenen Ausführungen als eigene und neue Erfindung geltend gemacht.

1.) Destillierverfahren nach dem Prinzip der sogenannten "Kurzweg"-Destillation, im wesentlichen dadurch gekennzeichnet, dass der Struktur des Verdampfungsträgers eine dritte Dimension hinzugefügt wird, sodass bei abgewickelter Mantelfläche eines Volumens im Vergleich zu einer ebenen, zweidimensionalen Fläche gleichen Umfangs ein mindestens dreimal höherer Wert erzielt wird, wodurch bei gleicher Stärke eines auf der Trägerfläche verteilten flüssigen Films die Gesamtmenge an Flüssigkeit auf dem dreidimensionalen Träger im Verhältnis zu der auf diesem Träger verfügbaren Gesamtfläche erhöht werden kann, und dass die für den Destillationsvorgang erforderliche Erwärmung unter Einsatz von Mikrowellen erfolgt.

2.) Destillierverfahren gemäss Anspruch Nr. 1, dadurch gekennzeichnet, dass die Verdampfer aus Stoffen bestehen, deren Oberfläche dreidimensional bzw. räumlich strukturiert ist und Vertiefungen, Überschneidungen bzw. Zwischenräume aufweist, in die die Flüssigkeit eindringen kann, wobei je nach der spezifischen Anwendung des Verfahrens Werkstoffe unterschiedlicher Art, jedoch innerhalb der genannten gemeinsamen Merkmale in Frage kommen.

3.) Destillierverfahren gemäss obiger Ansprüche, dadurch gekennzeichnet, dass die Verdampfer kegelstumpfförmig ausgebildet sind, wobei sich ihr kleinster Durchmesser oben befindet, und eine Drehbewegung ausführen, während die Flüssigkeit im oberen Bereich, d.h. am kleineren Durchmesser, tangential aufgegeben wird, sodass der flüssige Film durch die Einwirkung der Fliehkraft eine schraubenförmige Abwärtsbewegung ausführt.

4.) Destillierverfahren gemäss obiger Ansprüche, dadurch gekennzeichnet, dass die Mantellinie der Verdampfer einen je nach Beschaffenheit der zu destillierenden Produkte unterschiedlichen Winkel, vorzugsweise jedoch einen Winkel von 6 Grad, in Bezug auf die Senkrechte bildet.

5.) Destillierverfahren gemäss obiger Ansprüche, dadurch gekennzeichnet, dass die Drehgeschwindigkeit der Verdampfer in Abhängigkeit von den Adhäsionskräften und der Fliessgeschwindigkeit der Flüssigkeit veränderlich, vorzugsweise auf ca. 500 U/min eingestellt werden kann.

6.) Destillierverfahren gemäss obiger Ansprüche, dadurch gekennzeichnet, dass die Höhe der Verdampfer in Abhängigkeit von der dynamischen Viskosität der Flüssigkeit bei Destillationstemperatur gewählt wird.

7.) Destillierverfahren gemäss obiger Ansprüche, dadurch gekennzeichnet, dass die Verdampfer und insbesondere die Träger austauschbar sind, sodass ein und dasselbe Gerät in der Praxis für Produkte unterschiedlicher Art eingesetzt werden kann.

8.) Destillierverfahren gemäss Anspruch Nr. 1, dadurch gekennzeichnet, das Mikrowellen einer Frequenz von ca. 2450 MHz zum Einsatz kommen.

9.) Destillierverfahren gemäss obiger Ansprüche, dadurch gekennzeichnet, das die Träger des Verdampfers für Mikrowellen durchlässig sind.

10.) Destillierverfahren gemäss Anspruch Nr. 8, dadurch gekennzeichet, dass die Mikrowellenquelle von Wellenleitern unterstützt wird, die dafür sorgen, dass die Mikrowellen den vorgesehenen Bereich, d.h. die dreidimensionalen Verdampfer bestrahlen.